Europäisches Patentamt

European Patent Office

Office européen des brevets

(11) Publication number: **0 436 153 A2**

(12) **EUROPEAN PATENT APPLICATION**

(21) Application number: 90123770.1

(51) Int. Cl.⁵: **B29C 33/62**

(22) Date of filing: **11.12.90**

(30) Priority: **13.12.89 JP 322977/89**

(43) Date of publication of application:
**10.07.91 Bulletin 91/28**

(84) Designated Contracting States:
**BE DE FR GB IT NL SE**

(71) Applicant: **NIPPON ZEON CO., LTD.**
**6-1, Marunouchi 2-chome**
**Chiyoda-ku Tokyo 100(JP)**

(72) Inventor: **Sugawara, Tomoo**
**481, Miyauchi, Nakahara-ku**
**Kawasaki-shi, Kanagawa(JP)**
Inventor: **Okumura, Kin-ichi**
**801-6-143, Kamimachiya**
**Kamakura-shi, Kanagawa(JP)**
Inventor: **Yamato, Motoyuki**
**2-232, 2-21, Komo, Ooiso-cho**
**Naka-gun, Kanagawa(JP)**

(74) Representative: **von Kreisler, Alek,**
**Dipl.-Chem. et al**
**Patentanwälte Von Kreisler-Selting-Werner,**
**Deichmannhaus am Hauptbahnhof**
**W-5000 Köln 1(DE)**

(54) **Mold release agent.**

(57) A polyvinyl alcohol precoated mold provides a reactive injection molding (RIM) process without any sticky adhesion on the mold surface or product produced.

According to the method of the present invention, the products so obtained have acceptable hardened surfaces and a smooth surface appearance. The molded product has no adherent polymerization residues on its surface providing for improved adhesion of subsequently applied coatings.

EP 0 436 153 A2

# MOLD RELEASE AGENT

## BACKGROUND OF THE INVENTION

### 1. Technical Field

This invention relates to the ring-opening bulk polymerization of norbornene polymers in a mold. Particularly, this invention relates to the reaction injection molding of norbornene monomers to produce a molded product with improved surface characteristics. More particularly, this invention relates to a mold release agent that does not adversely affect the polymerization activity of norbornene monomers.

### 2. State of the Art

The reaction injection molding of norbornene monomers such as, for example, dicyclopentadiene (DCP) or methyltetracyclododecene (MTD) has been utilized to produce a wide variety of products for the automotive, electronic, construction, furniture, and leisure industries. To produce these products, a great variety of molds in all shapes and sizes are required. For economy, it is necessary that the unit cost of these molds be as low as possible. Accordingly, it has been proposed to replace costly metal molds with wooden, sand, gypsum, and concrete molds, or resinous molds made from unsaturated polyesters, epoxies, or mixtures of unsaturated polyester or epoxy resins with metal powders.

However, when norbornene monomers are molded in the presence of a metathesis catalyst in these non-metallic molds, a sticky residue (sticky product) forms on the surfaces of the mold and molded product. Consequently, molded products with luster and a smooth surface are difficult to obtain. Moreover, such molded products may have an odor from unreacted residual monomer, and may have adhesion problems with respect to subsequently applied coatings.

Furthermore, when such a sticky residue remains on the mold surface, it must be removed before the next molding cycle, consequently reducing the efficiency of the molding operation.

Accordingly, in molding products from norbornene monomers via ring-opening bulk polymerization in a mold, there is a need for the development of an economical molding method that does not produce a sticky residue on the mold or product surface and provides for increased molding cycles. Furthermore, there is a demand for a polynorbornene product with improved surface characteristics that allows for secondary processing, such as coating and bonding.

## SUMMARY OF THE INVENTION

It is an object of the present invention to provide a method for producing a polynorbornene product with improved surface characteristics.

It is another object of the present invention to provide a method for the production of polynorbornene products with increased mold cycles.

It is still another object of this invention to provide a mold release agent that does not adversely affect the reactivity of norbornene monomers.

It is a further object of the present invention to provide a method for the reaction injection molding of norbornene monomers in metallic and non-metallic molds without any adherent surface residues on the mold and molded product.

These and other objects of the present invention are accomplished by coating the surface of a mold cavity with a mold release agent comprising a polyvinyl alcohol.

## DETAILED DESCRIPTION OF THE INVENTION

### Mold Release Agent

The mold release agent of the present invention is a polyvinyl alcohol (PVA) prepared by the hydrolysis of a vinyl ester polymer such as vinyl acetate or a vinyl ether polymer such as benzyl vinyl ether.

The desired PVA utilized in this invention should have as many hydroxyl groups as possible in the polymer chain. The hydroxyl group content is generally expressed as the degree of saponification. Preferably, this invention contemplates a degree of saponification of more than 90 mole percent, and more preferably more than 95 mole percent. A PVA with a low degree of saponification adversely affects the metathesis polymerization reaction leaving an adherent residual material in the mold and on the surface of the molded product.

Generally, when a norbornene type monomer is polymerized in the presence of a metathesis catalyst, the presence of the hydroxyl groups adversely affects the polymerization reaction. Accordingly, it is quite unexpected that there is no adhesion of sticky residual materials when a material with a high degree of saponification and high hydroxyl content is utilized as a mold release agent. Without wishing to be bound by a specific theory of invention, it is believed that the reason for the absence of an adverse effect on the polymerization reaction by utilizing a PVA with a high degree of saponification is its noncompatibility with the norbornene type monomer(s).

The degree of polymerization of PVA is acceptable so long as it forms a film when applied to the surface of a mold, but an average degree of polymerization of more than 200 is preferable with a degree of polymerization of 300 to 10,000 being most preferred. The degree of polymerization is measured in accordance with JISK-6726.

The vinyl alcohol mold release composition of the present invention can be used alone or in a mixture with a metal particulate and/or an inorganic filler. The use of a metal particulate component with the PVA is especially preferred. Suitable metals include aluminum, steel, copper, zinc, tin, silver, iron, nickel or titanium. Among these, aluminum is preferred.

Suitable inorganic fillers include calcium carbonate, titanium oxide, silica, alumina, aluminosilicate, aluminum hydroxide, talc, carbon black, milled glass, or mica.

The form of the metal particulate and the inorganic filler can be either powder, flake or fibrous. The preferred particle size of the particulate metal and inorganic filler is less than 0.1 mm in length and less than 0.1 mm in thickness.

The compositional ratio of PVA to metal particulate or inorganic filler is about 1 to about 200 parts by weight, preferably about 3 to about 100 parts by weight, per 100 parts PVA. The reason for the enhanced effectiveness of such compositions is not known. Again without wishing to be bound by a particular theory, plausible causes are due to the composition's low compatibility with the norbornene type monomer and an efficient transfer of the heat of reaction.

A precondensate of a thermosetting resin such as urea, melamine, or phenolic resins may be used with PVA. The amount of the precondensate utilized is about 1 to about 20 parts per 100 parts PVA, and the resulting mixture is then cured or hardened.

In accordance with this invention, PVA is dissolved in water or a water and alcohol mixture. The resulting solution is used to coat the mold. The concentration of PVA in the solution ranges from about 1 to about 25 weight percent, and preferably from about 1 to about 20 weight percent.

When PVA is utilized with a metal particulate and/or an inorganic filler, the metal particulate and/or inorganic filler is dispersed in the PVA solution. In dispersing the metal powder and/or inorganic filler, a small amount of cationic, anionic, or nonionic surfactant can be added to stabilize the dispersion. The use of surfactants should be limited because excessive amounts may induce difficulty in the demolding operations, may cause improper hardening of the molding material, and/or may cause discoloration. The amount of surfactant utilized is less than about 1.0 part by weight per 100 parts water, preferably less than about 0.5 part by weight.

## Mold Treatment

In the method of present invention, the internal surface of a mold/mold cavity is coated with the PVA mold release agent. Coating techniques include dipping the mold in the PVA mold release solution, spraying the PVA solution on the mold, roller or brush coating the mold with the PVA solution, or wiping the mold cavity surface with a cloth impregnated with the mold release solution.

After coating the mold or mold cavity with the mold release agent, it is important that as much of the water and/or solvent as possible be removed so that a film is formed. Without thorough removal of the water and/or the solvent, the polymerization reaction of a norbornene type monomer may be inhibited.

To improve the effectiveness of the PVA coating on the mold surface, it is beneficial to heat treat (e.g., cure) the resulting film. The heat treatment may be carried out for a few or several minutes at 140-200°C. Heat treatment of the PVA mold release agent is imperative when a thermosetting precondensate mixture is used.

The PVA mold release coating or portions thereof may be acetalized with an aldehyde such as formalin. The aldehyde is disbursed in the PVA mold release solution. The mold release composition is then coated onto the mold cavity surface. After coating, the composition is heat treated until the water and/or solvent evaporates and a film is formed.

The thickness of the PVA coating on the mold surface is about 1 to about 200 $\mu$m (dry thickness), preferably about 5 to about 80 $\mu$m.

To improve the adhesion of the mold release coating to a mold surface, the mold surface is pretreated prior to the coating application. Pretreatment methods include sandblasting or disc sanding, sand paper polishing, and degreasing. Additionally, the mold surface can be coated with a base coat material to form a base coating. The mold release coating can be applied thereover.

## Mold Construction

The mold utilized in the method of the present invention can be constructed from a metallic or a nonmetallic material. Any suitable mold construction material can be utilized, but for economic reasons, wood, sand, gypsum, concrete, or plastic materials such as silicone resins, unsaturated polyester resins, epoxy resins, polynorbornene resins obtained by RIM. Preferably, the foregoing plastics are mixed with the aforesaid metal particulates.

Since the surface of the above-mentioned molds are nonmetallic, they can readily interfere with the polymerization reaction of a norbornene type monomer. When coated onto these mold surfaces, the mold release agent of the present invention is very effective in providing for efficient polymerization of norbornene monomers and excellent demolding of the finished product.

The shape of a mold can be simple or complex. In intrically shaped molds having ribs or bosses where air pockets can readily form, a PVA mold release agent of the present invention prevents the adhesion of undesirable materials to the mold surface and/or the molded product.

## Norbornene Type Monomer

According to this invention, any norbornene type monomer having a norbornene ring can be utilized. When a high thermal deformation temperature is needed, a norbornene type monomer with at least three rings is preferred.

The examples of norbornene type monomers are: bicyclic norbornenes such as 2-norbornene, 5-methyl-2-norbornene, 5-ethyl-2-norbornene, 5-butyl-2-norbornene, 5-hexyl-2-norbornene, 5-ethylidene-2-norbornene, 5-vinyl-2-norbornene, or 5-phenylnorbornene; tricyclic norbornenes such as dicylcopentadiene or dihydrodicyclopentadiene; tetracyclic norbornenes such as tetracyclododecene, methyltetracyclododecene, ethyltetracyclododecene, dimethyltetracyclododecene, alkylidenetetracyclododecene, or phenyltetracyclododecene; pentacyclic norbornenes such as tricyclopentadiene; or heptacyclic norbornenes such as tetracyclopentadiene. Also, a norbornene type monomer containing polar groups may be used. Examples of such monomers are 5-methoxycarbonylnorbornene, 5-cyanonorbornene, 5-chloronorbornene. Any of the above described monomers can be used individually or in combination.

Among the monomers, tricyclic, tetracyclic and pentacyclic norbornene monomers are preferred because of their availability, reactivity, and heat resistance.

Also, in accordance with this invention, a thermosetting type polymer forming material is preferred. For this purpose, a crosslinkable monomer is utilized. By crosslinkable monomer is meant a norbornene type monomer having at least two reactive double bonds. Examples include dicyclopentadiene, tricyclopentadiene, or tetracyclopentadiene. When the norbornene type monomer is a crosslinkable monomer, then the use of another crosslinkable monomer is not needed.

Norbornene type monomers having three or more rings can be obtained by heat treating dicyclopentadiene. The heat treatment conditions for dicyclopentadiene is heating at 120-250°C for 0.5-20 hours under an inert atmosphere. From this heat treatment procedure, a monomer mixture containing tricyclopentadiene and unreacted dicyclopentadiene can be obtained.

In addition, monocycloolefins such as cyclobutene, cyclopentene, cyclopentadiene, cyclooctene, or cyclododecene can be polymerized via ring-opening polymerization with one or more of the aforementioned norbornene monomers without deviating from the scope of this invention.

## Catalyst System

Any known metathesis catalyst can be utilized for the ring-opening polymerization of the norbornene type monomers of the present invention. Examples of such catalysts are disclosed in Japanese Kokai Nos. 58-127728, 58-129013, 59-51911, 60-79035, 60-186511, 61-126115.

Specific examples of suitable metathesis catalysts are the halides, oxyhalides, oxides and organoammonium salts of molybdenum, tungsten or tantalum. The foregoing catalysts are utilized in conjunction with

4

cocatalysts. Examples of suitable cocatalysts are alkylaluminum halides, alkoxyalkylaluminum halides, aryloxyalkylaluminum halides, and organic tin compounds.

When alkylaluminum halide cocatalysts are utilized, the polymerization reaction is initiated as soon as the activator and catalyst come in contact with each other. The initiation of polymerization can be delayed by the addition of a moderating agent to the cocatalyst. Such moderators include ethers, an esters, a ketones, nitriles, and alcohols as disclosed in Japanese Kokai Nos. 58-129013 and 61-120814. When glass fiber is used as a filler material, the impregnation of the reactive monomer solution (e.g. catalyst, cocatalyst and monomer(s)) into the fibers must be homogeneous. Accordingly, it is beneficial to use a reactive monomer solution with a long pot life (preferably longer than five minutes, especially longer than 10 minutes at 30°C).

In addition to a catalyst and/or cocatalyst, other additives can be utilized in the reactive monomer solution. For example, a halogenated hydrocarbon such as chloroform, carbon tetrachloride, or hexachlorocyclopentadiene as disclosed in Japanese Kokai No. 60-790035 or a metal halide such as silicon tetrachloride, germanium tetrachloride, or lead tetrachloride as activating agents.

The amount of the metathesis catalyst per mole of monomer is commonly utilized in the range of from about 0.01 to about 50 millimoles, preferably from about 0.1 to about 10 millimoles. The range of the amount of the cocatalyst utilized per catalyst component is commonly from about 0.1 to about 200 (mole ratio), preferably from about 2 to about 10 (mole ratio).

It is preferred that the metathesis catalyst and the cocatalyst be dissolved in the monomer. However, so long s it does not affect the formation of the products (or the physical properties thereof), the catalyst and cocatalyst can be suspended or dissolved in a trace of solvent.

**Molding Conditions**

In this invention, a norbornene type monomer undergoes bulk ring-opening polymerization in the presence of a metathesis catalyst in a mold.

In the preferred method for manufacturing polynorbornene polymers, the norbornene monomer is divided into two solutions, which are then placed in separate vessels. A metathesis catalyst is added to one vessel, while a cocatalyst is added to the other vessel so that two stable reaction solutions are prepared. These two reaction solutions are mixed and then injected into a mold or frame of the desired shape. Then ring-opening polymerization by the bulk method is performed.

In this invention, a conventional impingement RIM molding apparatus can be utilized. This method can be utilized for reacting a two reaction stream process. In this case, the two solutions are kept in separate holding vessels. The two solutions (e.g. solution streams) are then allowed to mix at the mixing head of a RIM machine, and then conveyed to a mold at elevated temperature to obtain a product by bulk polymerization.

This invention is not limited to an impingement RIM molding apparatus. For a long pot life at room temperature, the two solutions can be mixed completely in a mixer and then repeatedly cast in preheated molds by injecting or pouring as described in Japanese Kokai No. 59-51911 (U.S. Patent No. 4,426,502). The reactant solutions can also be cast continuously.

In this mode, the apparatus can be quite simple in comparison with an impingement mixing apparatus, or it can be operated under low pressure, which is advantageous. This method can be applied to a mixture containing a large amount of glass fiber filler and, by slowing down the injection speed, one can impregnate the fiber with the reaction solution in a homogeneous manner.

Furthermore, this invention is not limited to using a two stream system only. To one skilled in the art, it will be easily understood that in a third vessel containing a monomer, a desired additive can be used as the third reactant stream supply.

The mold temperature utilized is generally above about 30°C, preferably about 40 to about 200°C. The mold pressure utilized is commonly in the range of from about 0.1 to about 100 kg/cm$^2$.

The polymerization time can be selected according to need and is commonly less than 20 minutes, preferably approximately 5 minutes or less.

The reactant solution supplies are commonly stored in a nitrogen or an inert gas atmosphere but, in a molding operation, such an atmosphere may not be necessary.

**Optional Components**

The polymer characteristics of the present invention can be modified by the addition of antioxidants, fillers, pigments, coloring agents, foaming agents, fire retardants, friction aids, elastomers, or a dicyclopentadiene type thermally-polymerized resin hydrate.

The antioxidant can be selected from any plastic/rubber antioxidant such as phenolic, phosphorus, or amine based material.

The filler can be selected from any inorganic filler such as milled glass, long glass fibers, glass mat, carbon black, talc, calcium carbonate, or mica.

Examples of suitable elastomers are natural rubber, polybutadiene, polyisoprene, styrene-butadiene copolymer (SBR), styrene-butadiene-styrene block copolymer (SBS), styrene-isoprene-styrene block copolymer (SIS), ethylene-propylene-diene terpolymer (EPDM), ethylene vinyl acetate copolymer (EVA), or their hydrogenated products.

The additives can be added to one or more of the reaction streams/solutions, or they can be inserted into the mold cavity.

The following examples will show one skilled in the art how to operate within the scope of the present invention and are not intended to serve as a limitation on the scope hereof. In these examples, all parts are parts by weight and all percentages are percentages by weight unless otherwise indicated.

**Example 1**

To 100 parts of dicyclopentadiene (DCP) were added 6.5 parts of styrene-isoprene-styrene block copolymer (SIS, Nippon Zeon Co., trade name: Quintac 3421), and the resulting solution was divided into equal portions. To the first portion (designated as solution A), diethylaluminum chloride (DEAC), n-propyl alcohol and silicon tetrachloride were added to form a solution at concentrations in DCP of 41 millimolar, 41 millimolar and 21 millimolar, respectively.

To the other portion (designated as solution B) of the solution, tri(tridecyl)ammonium molybdate catalyst was added to DCP to form a 10 millimolar catalyst solution in DCP. 4 parts (based on 100 parts of DCP) of a phenol based antioxidant (Ethanox 702, Ethyl Corp.) were then added and dissolved.

The two solutions were stored at 35°C in separate containers. Solutions A and B were metered into the mixing head of a RIM machine at a 1:1 volume ratio and then injected into a mold cavity. The mold was constructed from an unsaturated reinforced polyester resin (Ripoxy GM820, Showa Kobunshi Co.) and had a rectangular cavity measuring 200 mm x 200 mm x 3 mm in size.

The mold cavity surface was coated with a 10 percent polyvinyl alcohol-water solution (Poval, Kuraray Co.) of the designated grades shown in Table 1. The PVA mold release agent was dried for one hour at 90°C to form a coating of about 20 μm thick.

The mold was preheated to 50°C and the molding material (a mixture of solution A and solution B) was injected into the coated mold cavity over a period of approximately 20 seconds. The molding material was allowed to polymerize for 120 seconds.

After polymerization, a flat product was removed from the mold. The appearance of the mold cavity surface and the surface of the polymerized product were then examined. The results are listed in Table 1.

For comparative purposes, the foregoing procedure was repeated without the use of a PVA mold release agent.

The surface rating method is set forth as follows:

Mold Surface

After the molding operation, the surface of the mold was visually examined and assigned one of the following ratings.
•: Clean surface
0: Some adhesion
▫: Adhesion
X: Much adhesion

Product Surface

After removal from the mold, the product surface was visually examined and assigned one of the following ratings.
•: No adhesion and acceptable hardening
0: No adhesion but the hardened surface had a soft feel.
▫: Adhesion was observed and the hardened surface had flexible and soft feel.
X: Much adhesion.

**Table 1**

| Example | 1-1 | 1-2 | 1-3 | 1-4 | 1-5 |
|---|---|---|---|---|---|
| Grade | PVA-124H | PVA-105 | PVA-CST | PVA-613 | - |
| Degree of saponification (mole %) | 99.6 | 98.5 | 96.0 | 93.5 | - |
| Degree of polymerization | 1,700-2,400 | 300-700 | 1,700-2,400 | 1,700-2,400 | - |
| Mold surface | • | • | • | O | X |
| Product surface | O | O | O | O | X |

## Example 2

Thirty parts of fine aluminum flakes (less than 0.1 mm in length and less than 0.01 mm in thickness) were added to 70 parts of the PVA in a 10 percent PVA/water solution (PVA grade as set forth in Example 1-2), and then ethylene glycol alkyl ether (Noigen ET-143, Dai-Ichi Kogyo Seiyaku Co.) was added to and dispersed in the PVA/water mixture to form a 0.5 percent solution. The solution was sprayed onto a mold surface to form a coating layer. The molding procedure of Example 1 was then carried out.

After molding, the quality of the molded product was evaluated. The mold surface was clean, and had no adherent residue (rating: •). The polymerized product hardened properly, and had no adherent residue (rating: •).

## Example 3

In this Example, a PVA coating layer was formed on a mold surface, the coating was dried for four minutes in air at 150°C and then the test was carried out in the same manner as Example 1-2. The PVA mold release composition was the same as set forth in Example 1-2.

After molding, the molded product was evaluated. The surface was clean and had no adherent material (rating: *). The product hardened properly (rating: *).

**Example 4**

In this Example, the mold utilized to carry out the test was prepared from a well polished veneer sheet. The PVA mold release composition utilized and the testing procedures conducted were the same as set forth in Example 1-2.

After molding, the molded product was evaluated. The mold surface was clean and had no adherent residue (rating: *). The product surface had no adherent residue, but is was somewhat soft (rating: 0).

The same test was carried out by using a veneer sheet mold. The product and mold surface were evaluated. The mold and product surfaces had many sticky spots.

**Example 5**

In this Example, a mixture of epoxy resin (Ardalite, Ciba-Geigy) containing 50% copper powder was used for preparing a mold. The test was carried in the same manner as set forth in Example 1-2.

The product was evaluated. The mold surface was smooth (rating: *) and the product had no adherent residue. However, the hardened molded product surface was somewhat soft (rating: 0).

The same molding process was carried out in a mold constructed from an epoxy resin containing copper powder. The PVA mold release coating was not used. After the molding, the mold and product surface had many sticky adhesive areas (rating: X).

**Example 6**

In this Example, a mold made from a sand casting and bentonite binder was prepared and coated with PVA to a thickness of about 20 to 100 $\mu$m. The resulting mold was used to carry out a molding procedure as set forth in Example 1-2. The PVA mold release composition was the same as set forth in Example 1-2.

The product and mold surface were evaluated. The mold had a clean surface (rating: *) and the product had no sticky spots. However, the hardened molded surface was somewhat soft (rating: 0).

This same procedure was carried out without the PVA mold release agent. The mold and product surface had many adherent sticky areas (rating: X).

**Example 7**

In Example 2, after the first mold cycle, the mold was used for 10 subsequent mold cycles without recoating with the PVA mold release agent. The evaluation of the mold cavity surface after all 10 moldings showed a clean mold surface (rating: *). The molded products had no sticky spots and the surface of the product was acceptable (rating: *)

**Claims**

1. A process for the ring-opening bulk polymerization of a norbornene monomer(s) in a mold to form a molded product comprising providing a mold having a mold cavity; coating the surface of said mold cavity with a mold-release agent comprising a polyvinyl alcohol; optionally curing said mold release agent; conveying at least one norbornene monomer into said mold cavity; polymerizing said monomer(s) in the presence of a metathesis catalyst system to form a molded product; and removing said molded product from said mold.

2. The process of claim 1 wherein said polyvinyl alcohol has a degree of saponification of more than about 90 mole percent.

3. The process of claim 1 wherein said polyvinyl alcohol has a degree of saponification of more than about 95 mole percent.

4. The process of claim 1 wherein said curing step comprises thermally treating said coated mold until an adherent film is formed.

5. The process of claim 4 wherein said thermal treatment is conducted at about 140 to about 200° C.

6. The process of claim 1 wherein said polyvinyl alcohol has an average degree of polymerization of more than about 200.

7. The process of claim 6 wherein said polyvinyl alcohol has an average degree of polymerization of about 300 to about 10,000.

8. The process of claim 2 wherein said mold release agent further comprises a metal particulate and, optionally, an inorganic filler.

9. The process of claim 8 wherein said metal particulate is selected from the group consisting of aluminum, steel, copper, zinc, tin, silver, iron, nickel, titanium, and mixtures thereof, and said inorganic filler, if present, is selected from the group consisting of calcium carbonate, titanium oxide, silica, alumina, aluminosilicate, aluminum hydroxide, talc, carbon black, milled glass, mica, and mixtures thereof.

10. The process of claim 8 wherein said mold release agent comprises about 1 to about 200 parts by weight of metal powder per 100 parts by weight of polyvinyl alcohol and, if present, about 1 to about 200 parts by weight of inorganic filler per 100 parts by weight of polyvinyl alcohol.

11. The process of claim 8 wherein said mold release agent is cured on said mold by thermal treatment at about 140 to about 200° C.

12. The process of claim 8 wherein said mold release agent further comprises an precondensate selected from the group consisting of urea resins, melamine resins, phenolic resins, and mixtures thereof in the amount of about 1 to about 20 parts by weight per 100 parts by weight of said polyvinyl alcohol; and said mold release agent is cured on said mold by thermal treatment at about 140 to about 200° C.

13. The process of claim 8 wherein said mold release agent comprises about 3 to about 100 parts by weight of metal particulate and about 3 to about 100 parts by weight of inorganic filler per 100 parts by weight of polyvinyl alcohol.

14. The process of claim 1 wherein a non-metallic mold is used.

15. The process of claim 1 wherein said monomer is selected from the group consisting of bicyclic monomers, tricyclic monomers, tetracyclic monomers, pentacyclic monomers, heptacyclic monomers, and mixtures thereof.

16. The process of claim 15 wherein said monomer is selected from the group consisting of norbornene, norbornadiene, dicyclopentadiene, dihydrodicyclopentadiene, tetracyclododecene, tricyclopentadiene, tetracyclopentadiene, including the alkyl alkenyl, alkylidenyl and aryl substituents thereof.

17. The process of claim 1 wherein said metathesis catalyst system comprises a catalyst selected from the group consisting of the oxides, halides, oxyhalides, and organoammonium salts of tungsten, molybdenum and tantalum, and mixtures thereof.

18. A mold release agent for the ring-opening bulk polymerization of a norbornene monomer(s) in a mold comprising a polyvinyl alcohol having a degree of saponification of more than bout 90 mole percent or more.

19. The mold release agent of claim 18 further comprising a metal powder and, optionally, an inorganic filler.

20. The mold release agent of claim 19 further comprising an precondensate selected from the group consisting of urea resins, melamine resins, phenolic resins, and mixtures thereof; which is present in the amount of about 1 to about 20 parts by weight per 100 parts by weight of said polyvinyl alcohol.

21. The mold release agent of claim 18 wherein said polyvinyl alcohol has a degree of saponification of 95 percent or more.

22. The mold release agent of claim 18 wherein the polyvinyl alcohol has an average degree of polymerization of more than about 200.

23. The mold release agent of claim 19 wherein said metal particulate is selected from the group consisting of aluminum, steel, copper, zinc, tin, silver, iron, nickel, titanium, and mixtures thereof, and said inorganic filler, if present, is selected from the group consisting of calcium carbonate, titanium oxide, silica, alumina, aluminosilicate, aluminum hydroxide, talc, carbon black, milled glass, mica, and mixtures thereof.

24. The mold release agent of claim 23 wherein said mold release agent comprises about 1 to about 200 parts by weight of metal particulate per 100 parts by weight of polyvinyl alcohol and, if present, about 1 to about 200 parts by weight of inorganic filler per 100 parts by weight of polyvinyl alcohol.